# EUROPEAN PATENT SPECIFICATION

(11) **EP 1 105 264 B1**
(45) Date of publication and mention of the grant of the patent: **26.05.2004**
(21) Application number: 99928155.3
(22) Date of filing: 01.07.1999
(51) Int. Cl.: B26F 3/00, B23K 26/00, H05B 41/34

(54) **METHOD OF RELEASING OF GLAZING PANELS FROM A FRAME**
VERFAHREN ZUM LÖSEN VON GLASSCHEIBEN VON EINEM RAHMEN
PROCEDE DE DEMONTAGE DE GLACES D'UN CADRE

(30) Priority: 11.08.1998 GB 9817441
(43) Date of publication of application: 13.06.2001
(73) Proprietor: Carglass Luxembourg Sarl - Zug Branch, 6300 Zug (CH)
(72) Inventor: KIERNAN, Michael, Noel, Seven Sisters SA10 9AW (GB); DAVIES, Christopher, Llanelli, Carmarthenshire SA15 7JN (GB); CLEMENT, Robert, Marc, Pontardade SA8 3HD (GB)
(74) Representative: Davies, Gregory Mark
(86) International application number: PCT/GB1999/002086
(87) International publication number: WO 2000/009302

(56) References cited:
- EP-A- 0 185 139
- EP-A- 0 215 960
- EP-A- 0 217 019
- EP-A- 0 521 825
- EP-A- 0 603 047
- EP-A- 0 762 409
- WO-A-96/17737
- DE-A- 4 320 341
- US-A- 3 392 259
- US-A- 5 269 868
- US-A- 5 272 716
- US-A- 5 895 589
- DATABASE WPI Section PQ, Week 9434 Derwent Publications Ltd., London, GB; Class P34, AN 94-277519 XP002094953 & RU 2 008 042 C (PAKT ASSOC), 28 February 1994 (1994-02-28)
- DATABASE WPI Section PQ, Week 9408 Derwent Publications Ltd., London, GB; Class P14, AN 94-063468 XP002094954 & SU 1 789 150 A (KISH POLY), 23 January 1993 (1993-01-23)

## Description

The present invention relates to a method of releasing glazing panel from supporting frames according to the preamble of claim 1 (see, for example, WO-A-9 617 737).

Reference to glazing panels should be understood to mean panels, screens, or windows of glass, plastics or any other material substantially transparent to wavelengths in the visible range of the spectrum.

Vehicle windscreens typically comprise either toughened glazing panels or laminated panel structures (typically comprising an outer glass layer, an inner glass layer and an interlayer, interposed between the outer and inner glass layers). The glazing panel may be tinted depending on preference to absorb specific wavelengths (particularly U.V.). For laminated windscreens the interlayer is typically tinted.

WO-A-9617737 discloses a method and apparatus for releasing bonded transparent screens (typically vehicle windscreens) from supporting frames to which they are bonded. The technique described uses laser energy directed to effect release of a screen from a frame. The technique is useful in that the laser energy is directed from the laser head to the bonding bead/glazing panel interface. Problems exist however in ensuring the required energy for release is delivered without overheating occurring in the body of the glazing panel, and also due to the nature of high energy laser apparatus there are inherent health and safety implications.

An improved technique has now been devised.

WO-A-9 617 737 may be described as disclosing a method of releasing a glazing panel from a frame to which the panel is bonded by interposed bonding material, the method comprising:
i) arranging light energy delivery means adjacent the glazing panel; and,
ii) operating the light energy delivery means to transmit light energy through the glazing panel to effect release of the glazing panel from the frame.

According to the present invention, the light energy delivery means comprises flashlamp electrical discharge apparatus.

The light energy delivered is preferably of a wavelength substantially in the range 300nm-1500nm (more preferably in the range 400nm-700nm).

The light energy delivered is desirably pulsed according to a predetermined regime, preferably such that the pulse event duration (T on) is less than the inter-pulse interval (T off).

Desirably, a single pulse event of light energy delivered is of sufficient energy to effect separation of the glazing panel from the frame along a length of the bonding material.

The apparatus for performing the method of the invention preferably includes a pulse forming network (which may include a capacitor and inductor arrangement) to drive the apparatus to produce a light pulse event. The apparatus preferably further comprises a trigger network for initiating operation of the pulse forming network.

Control means is preferably provided for controlling one or more apparatus parameters in performance of the invention method, preferably including the minimum permissible time elapsing between subsequent light pulse event. The control means is therefore preferably linked to the trigger network and/or the pulse forming network. A safety interlock is beneficially provided to reduce the risk of accidental initiation of a light pulse event. Preferred features of the safety interlock firing feature are described herein and in the appended claims.

It is preferred that means is provided for selectively adjusting the intensity of the light delivered in performance of the invention method. This is important in view of the differing degree to which various tinted glazing panels absorb light energy in the wavelength range contemplated. It is preferred that the apparatus includes different preset parameter settings which may be switched dependent upon the glazing panel tint to be de-bonded.

The light energy may be absorbed at the bonding material/panel interface either by the bonding material itself, or by an absorbing layer comprising the panel (such as the frit layer commonly found on vehicle glazing panels) or by a suitable light absorbent coating provided at the interface.

In performance of the method of the invention, the light energy delivery means may be tracked about the periphery of the glazing panel, preferably at a predetermined rate dependent upon the power of the light energy delivery means and the pulse regime. Tracking means (preferably motorised tracking means) may be provided for this purpose, in performance of the method of the invention.

Alternatively, in performance of the method of the invention, the light energy delivery means may be hand held and positioned on the glazing manually by an operator. The delivery means may therefore have a manual trigger for initiating a light pulse when the delivery head is positioned to the operators satisfaction.

The apparatus preferably includes a safety interlock requiring in performance of the method of the invention at least two input devices to be actuated before light energy can be delivered from the delivery means. One of the input devices comprising the interlock may include the (main) manual trigger.

The apparatus used in performing the method of the invention preferably includes a delivery head (desirably carrying a light emitting device) from which the light energy is delivered, the delivery head beneficially including at least two input devices comprising the safety interlock, both input devices on the delivery head requiring actuation in order to enable light energy to be delivered from the delivery means.

The method of the invention is beneficially performed using input devices comprising the safety interlock preferably comprise electrical input devices (such as switch means). Following actuation, the input devices comprising the interlock are preferably reset to a non-actuation state.

In one embodiment, the light energy delivered comprises a plurality of wavelengths, most preferably in the visible range of the spectrum. In one embodiment it is preferred that the light energy is non-coherent. The light energy preferably attenuates rapidly with distance such that at a few centimetres (preferably less than 10cm, more preferably less than 5cm) from the energy delivery means the light energy density is significantly diminished from its maximum value (preferably falling to 50% maximum value).

The pulse regime is controlled, preferably such that a following light pulse event is inhibited in the circumstances that a preceding light pulse occurred within a predetermined time period. This prevents the apparatus being operated too rapidly (which may cause overheating of the glazing panel and or the gas discharge tubes). If the trigger (or other actuator) is held by the operator permanently actuated, the apparatus control provides that a series of pulse events are initiated at a predetermined time interval (typically greater than the minimum permitted time interval). The predetermined time interval is set by the control means and is dependent upon the discharge energy level set. Typically the predetermined time interval for 'continual' actuation is substantially in the range 0.5-5s (more preferably 1-3s). The higher is the pulse discharge energy set the longer is the minimum permitted interval and also the set level of the predetermined time interval for 'continual' actuation.

Desirably, the pulse regime is controlled such that a following light pulse event is inhibited if the time elapsing after a preceding light pulse event is greater than a predetermined time. This ensures that the device may not accidentally be left in an operable condition following use for a series of pulse events. The apparatus, for example may revert to a "standby" mode.

The energy delivered is preferably substantially in the range 100 Joules-10,000 Joules per pulse (more preferably in the range 500-1500 Joules per pulse). The pulse duration (T on) is preferably substantially in the range 1µs-100ms, more preferably 1ms-2ms.

Desirably, operation of the gas discharge apparatus in performing the method of the invention is controlled to limit the pulse rate and/or duration of the light pulse.

The operation of the gas discharge apparatus in performing the method is preferably controlled by:
i) charging a capacitor arrangement;
ii) initiating a trigger pulse to discharge the capacitor arrangement; and,
iii) discharging the capacitor arrangement through an inductor to the gas discharge apparatus.

The apparatus for performing the method preferably includes a pulse forming network having a capacitor and inductor arrangement in which the capacitor discharges through the inductor to drive the electrical gas discharge apparatus to produce a light pulse. The apparatus preferably further comprises a trigger network for initiating the capacitor of the pulse forming network to discharge.

The method is preferably performed using apparatus having control means provided for controlling one or more apparatus parameters including the minimum permissible time elapsing between subsequent discharge pulses of the electrical gas discharge apparatus.

The method is preferably performed using apparatus in which the electrical gas discharge apparatus comprises a reflector (preferably a parabolic reflector) arranged to direct emitted light in a predetermined direction. The reflector preferably includes a reflective coating of a heat resistant material, preferably comprising a silver material.

The method is performed using apparatus preferably includes a window through which emitted light is directed to pass through the glazing panel. The window may be omitted from the apparatus, and omitting the window has been found to beneficially aid in cooling of the light emitting devices (discharge tubes).

Desirably, the method is performed using apparatus including an edge guide (preferably "snap fit" releasable) arrangement to locate against a peripheral edge of the glazing panel. The edge guide assists an operator in manually positioning the apparatus correctly with respect to the bonding bead securing the glazing panel.

The method may be performed using apparatus comprising focussing means arranged to focus the light energy at a predetermined location.

In one embodiment of the method, the tracking and pulsed operation of the light energy delivery means may be coordinated such that subsequent light pulses overlap spatially a relevant portion of the glazing panel. Operation in this manner ensures good separation of the panel from the frame at the bonding material/panel inner layer interface.

It has been found that for glazing panels (particularly those including a tinted interlayer) operation of the light energy delivery means in pulsed mode provides benefits, because energy absorption in the body of the screen or panel (particularly at the interlayer of laminated glazing panels) is minimised.

In a preferred embodiment the method of the invention is performed using apparatus comprising:
i) a light energy delivery head including an electrically operable light emitting element;
ii) a base unit remote from the delivery head, the base unit including electrical power supply for the light emitting element of the delivery head; and,
iii) flexible umbilical extending between the base unit and the delivery head permitting connection of the delivery head to the base unit.

The invention will now be further described in specific embodiments by way of example only and with reference to the accompanying drawings in which:
Figure 1 is a diagrammatic representation showing pulsed light operation of the light energy and the effect on glazing panel and frit temperature;
Figure 2 is a representation similar to that shown in Figure 1 showing prior art continuous wave laser radiation and the effect on frit and glazing panel temperature;
Figure 3 is a schematic representation of a first embodiment of light energy delivery means suitable for use in the method according to the invention;
Figure 4 is a perspective view of a preferred embodiment of apparatus to be used in the method according to the invention;
Figure 5 is a perspective view of the light energy delivery head of the apparatus of figure 4;
Figure 6 is a perspective assembly view of the head of figure 5;
Figure 7 is a system diagram of a apparatus for use in the method of the invention including the light energy delivery means of the preceding figures;
Figure 8 is a block diagram of the pulse forming network of the system shown in figure 7;
Figure 9 is a block diagram of the trigger network of the system shown in figure 7.

In the application shown, the apparatus 1 is used to release a vehicular glazing panel (windscreen 16) from a supporting frame 7 to which it is bonded by an interposed, dark coloured polyurethane bonding bead 8 which extends around the entire periphery of the panel 16 in contact with frame 7.

The windscreen panel 16 comprises an outer glass layer 9, an inner glass layer 10 and intermediately therebetween, an interlayer 11 comprising a tinted sheet material which is transparent to certain wavelengths of visible light but opaque to others and also to ultra violet (U.V.) radiation. The purpose of the interlayer 11 is to provide structural strength for the windscreen 16 such that in the event of impact the screen remains intact, and also to provide a U.V. barrier.

Immediately adjacent the bonding bead 8, the periphery of the inner layer 10 of the windscreen panel 16 is provided with a bonded glass frit layer 12 which is typically dark in colour (more typically black in colour). The purpose of the frit layer is to inhibit the passage of ultraviolet radiation through the screen to impinge upon the polyurethane bonding bead 8 which is typically degradable upon exposure to UV radiation.

Although described in the specific embodiments in relation to a laminated windscreen, the invention is equally suitable for use in relation to other similarly bonded glazing panels such as "toughened" vehicle glazing panels etc.

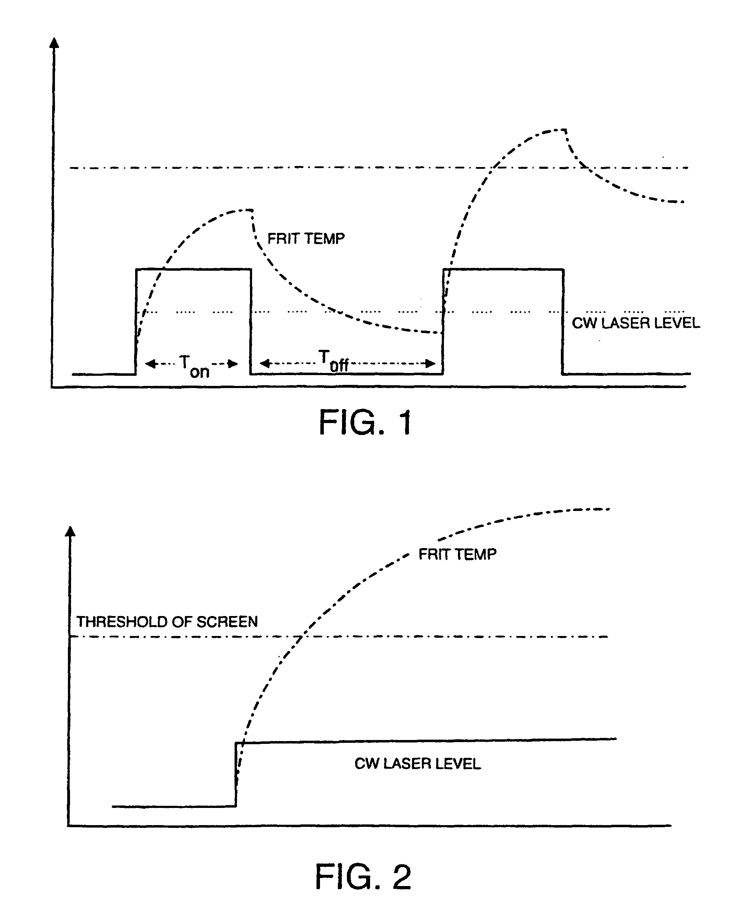

Figures 1 and 2 compare light pulsed in accordance with the preferred pulsing regime of the present invention (which will be described in detail hereafter), with continuous wave laser operation known from the prior art system disclosed in WO-A-9617737, and the associated effect on the temperature of the frit layer 12 in relation to threshold of glazing panel integrity (particularly delamination at the panel interlayer 11 for a laminated windscreen panel).

The use of continuous wave laser radiation results in excess heat build-up within the body of the panel 16, (particularly at the interlayer 11 for laminated screens). This has the effect that increased power is required than would be the case where significant heat build up does not occur within the body of panel 16. Furthermore, the heat build-up within the body of panel 16 has been found to result in glass fracture in the body of the glazing panel (or at interlayer 11 for laminated screens). This increases the energy absorption within the body of panel 16 leading to a "chain event" in which increasingly greater amounts of energy delivered is absorbed within the body of the panel 16. This results in less energy reaching the frit layer 12/bonding bead 8 interface, thereby reducing the effectiveness of the separation.

This over absorption within the body of the glazing panel can also occur for non-laminated windscreens such as 'toughened glass' windscreen glazing panels (particularly where tinted). A further problem with a laser system as disclosed in the prior art is that use of powerful laser apparatus in largely unsupervised situations has serious health and safety implications. Furthermore laser systems and apparatus tend to be relatively expensive.

The use of pulsed light operation enables a burst of energy to be delivered to the frit layer 12/bonding bead 8 interface in a sufficiently short time to ensure enough energy for release is absorbed at the bonding bead 8/frit layer 12 interface without detrimental heat build up in the body of the glazing panel 16. Sufficient energy for localised release of the glazing panel may be delivered in a single pulse burst; alternatively repeated successive pulses/bursts may be preferable, particularly with more darkly tinted glazing panels. Where successive pulses/bursts are utilised sufficient time between pulsed energy bursts (T off) is provided to allow heat absorbed within the body of the glazing panel (including at interlayer 11) to be dissipated. The use of non-collimated light facilitates rapid attenuation of energy with distance from the apparatus and makes the apparatus more suitable from a health and safety point of view.

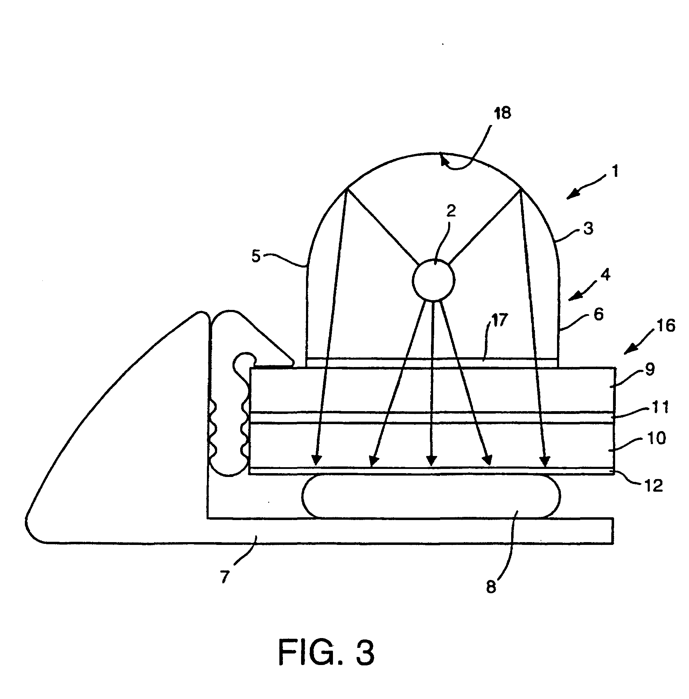

Referring to Figure 3, the apparatus generally designated 1 comprises a delivery head 4 including an electric gas discharge tube 2 containing a high pressure Noble/inert gas such as Xenon or Krypton. The discharge tube operates to produce an output burst of light of a range of wavelengths in the visible spectrum (approximately in the range 400nm to 700nm). The energy delivered, per pulse is typically in the range 500-1500 Joules however the energy disipates (attenuates) rapidly with distance from the tube. (This is an important operational aspect, as will be described further below).

A housing/casing 3 surrounds the discharge tube and includes shielding sidewalls 5,6 and a spanning visible light transmissible window 17. A parabolic reflector wall 18 is positioned opposite the window 17 to reflect light from the reverse side of discharge tube 2 to pass through the window 17. The reflector wall 18 is provided with a heat resistant reflective coating typically of a material including a silver material.

In use, the optical delivery head is positioned as shown in Figure 3 and a manually actuatable trigger is operated to produce a single light pulse which passes through the window 17 and is absorbed at the frit layer 12 and/or the bonding bead 8. The frit 12 or bonding bead rapidly heats up and separates from the screen typically either by glass ablation, temperature carbonisation of the bead 8, or other thermal mechanisms. Typically a single shot/pulse is sufficient to effect release over a length of screen approximating to the length of the discharge tube 2 (typically 5-15cm) although multiple shots may be used (for example at lower power to minimise frit damage, or where the screen is darkly tinted). In a typical system an energy footprint of 5cm x 2cm is projected onto the glazing panel. The operator then moves on to an adjacent portion of the screen periphery before instigating a further light pulse. The procedure is repeated about the entire perimeter of the panel to effect complete release.

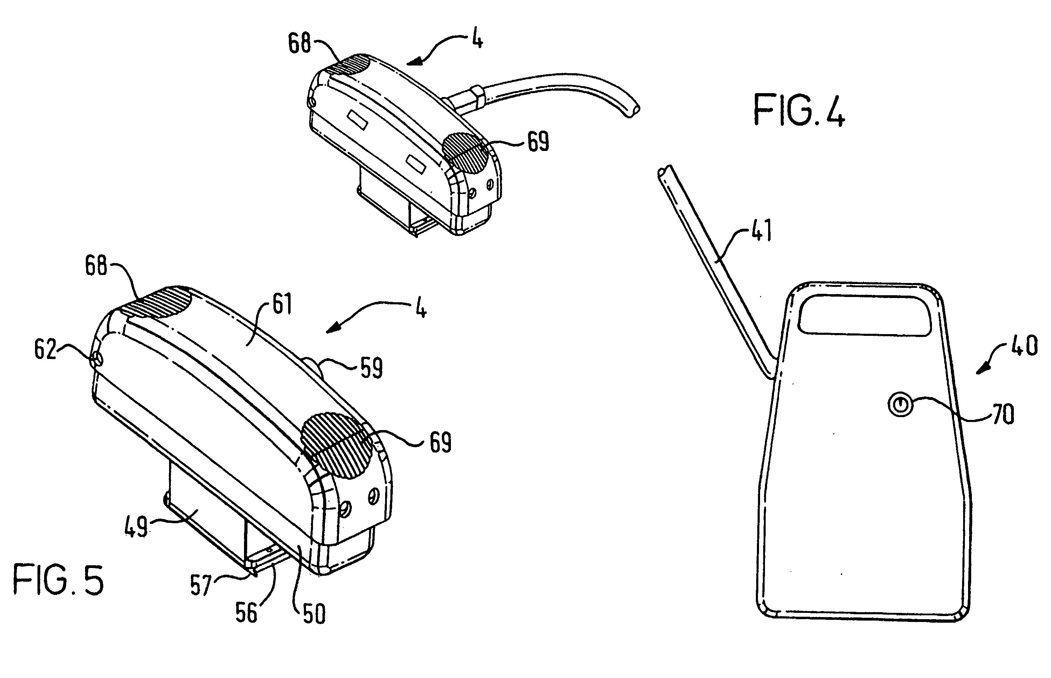

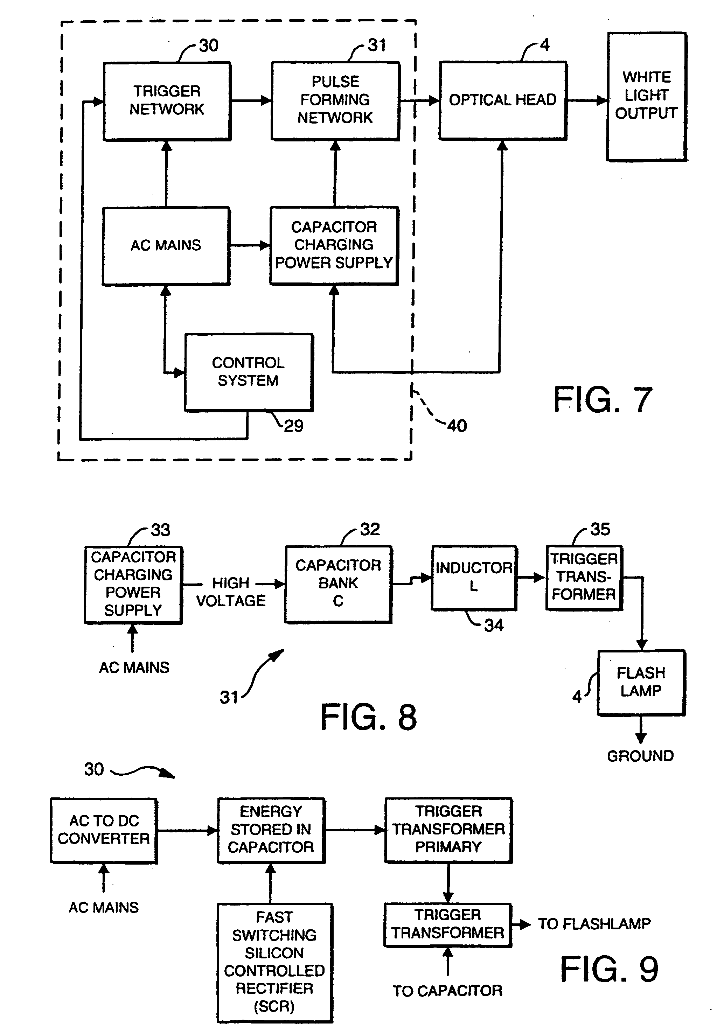

In the preferred arrangement of the apparatus used for performing the method according to the invention (as shown in figures 4 to 6) the delivery head 4 is connected to a base unit 40 by an umbilical 41. Base unit 40 includes the power supply and control system 29 for operation of the apparatus, including the trigger network 30, pulse forming network 31 capacitor bank 32 inductor 34 and capacitor charging power supply 33. The power supply and control system are described in detail below in relation to figures 7 to 9. The umbilical 41 includes the electrical cabling to supply electrical power to the components of the illuminating head 4, including the flashlamp discharge tubes 2a,2b and cooling fans 45,46.

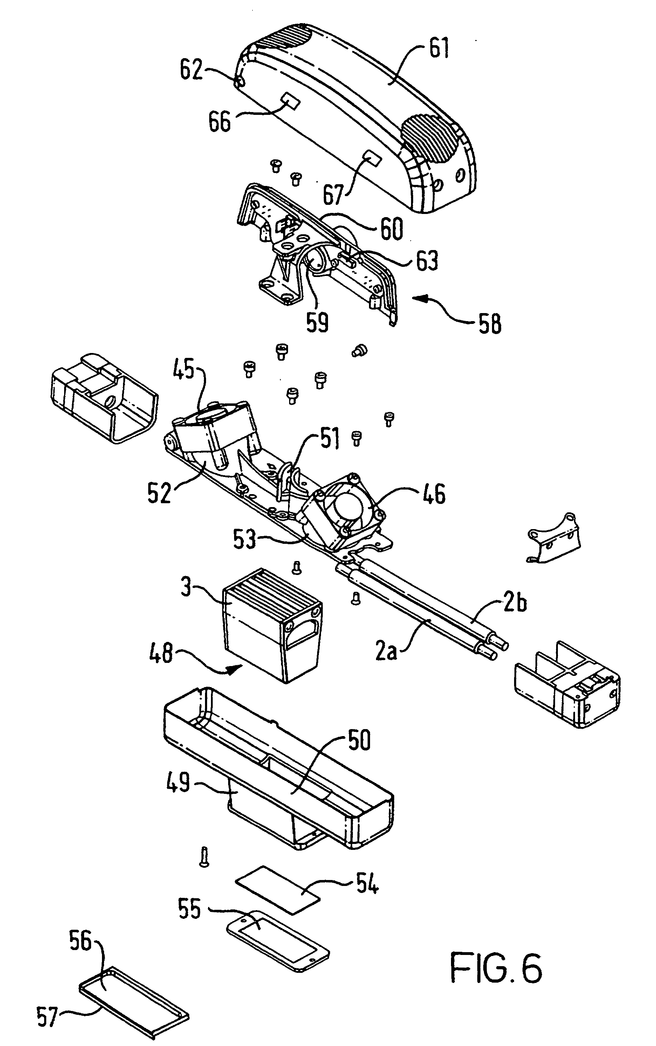

As shown in figure 6, the head includes a pair of flashlamps (electrical gas discharge tubes) 2a,2b arranged in parallel (but connected electrically in series) extending between end connectors and passing through apertures in housing 3. The provision of the flashlamps 2a,2b in parallel ensures that the required light energy is deliverable to effect release of the glazing panel and also improves thermal/electrical efficiency. Typically a system using tubes in parallel arrangement (connected electrically in series) can provide between 20,000 to 1 million pulse events (depending upon panel tint); a single tube would enable only approximately 200 - 500 pulse events before failure. Electrical connection in series improves provides optimum capacitor usage because the charge passes in series sequentially through the series connected tubes.

The internal walls of housing 3 are coated in a reflective heat resistant material (typically including a silver material) and define a curved reflector surface arranged to reflect the light from flashlamps 2a,2b downwardly through the open end 48 of housing 3. The housing 3 is received in a sheath 49 protruding from a lower casing portion 50. The lowermost extent of protruding sheath 49 is fitted with a quartz window 54 secured by an apertured fitment plate 55. The window 54 permits the illuminating light generated by flashlamps 2a,2b to pass out of housing 3. The underside of fitment plate 55 is fitted with a "snap f it" removable apertured plate 56 which includes a projecting longitudinal peripheral lip 57. Lip 57 serves as an edge guide, locating against the peripheral edge of the glazing panel and aiding in positioning the head in the correct position with respect to the bonding bead 8.

The upper portion of housing 3 is secured to a casting 51 which at opposed ends seats cooling fans 45,46 in respective angled ducts 52,53 to direct cooling air to cool the flashlamp tubes 2a,2b. Cooling of the flashlamp tubes is important in order to maximise the tube life. Typically flashlamp tubes (for other applications) are water cooled. Water cooling would be impractical for the apparatus of the present invention because the illumination head needs to be relatively lightweight and manoeuvrable for operator handling. The umbilical 41 would become too cumbersome if it were necessary to carry cooling water to the head and the head would be unwieldy if a water cooling jacket filled with cooling water were incorporated into the head design. Furthermore cooling water present in the head would be likely to absorb a portion of the useful light energy emitted from flash lamp tubes 2a,2b. The arrangement of the cooling fans, lamp tubes in parallel, and reflector are considered to be important, novel and inventive aspects of the design both individually and in combination.

A casting 58 is secured to the casting 53, extending upwardly therefrom. Casting 58 includes a hollow boss 59 to which the umbilical 41 is secured and includes an upper elongate edge 60. A shell moulded cap 61 is pivotally secured at one end (pivot mounting 62) to the upwardly extending casting 58. Cap 61 includes spaced vents 68,69 permitting fans 45,46 to draw air into the interior of the apparatus.

When downward manual pressure is applied to the cap 61, slight pivotal 'closing' movement of the cap relative to the casting 58 (against a biassing spring - not shown) occurs resulting in engagement of an internal formation provided on cap 61 with a limit switch 63 carried by the casting 58. As a result the limit switch closes. The control system 29 is configured to inhibit firing of a flashlamp pulse unless the limit switch 63 is closed. In this way, the limit switch 63 and pivotal cap 61 arrangement acts as a safety interlock preventing firing of the flashlamp unless predetermined conditions are satisfied (in this case unless sufficient pressure is applied to the cap 61). Even with the interlock overidden, an external switch 66 on the cap 61 must be actuated before the control system 29 initiates the flashlamp firing sequence. The interlock arrangement therefore requires at least two input signals to be passed to the control system 29 before a flashlamp pulse can be triggered. Other envisaged interlocks could, for example comprise a pressure or other sensor arranged on the head to detect contact with the glazing panel, and/or a second confirmatory manually actuatable switch 67 provided on the casing (both switches needing to be actuated for the flashlamp firing sequence to be initiated).

It has been found that significantly improved results are achieved where the light delivered is in the visible range of the spectrum, and the light is pulsed according to a regime in which a series of discrete pulses of light are transmitted, the pulse duration (T on) being substantially in the range 1µs to 100ms (more preferably in the range 1ms-2ms) and the pulse repetition frequency being substantially in the range 0.1Hz-10Hz (more preferably in the range 0.3Hz-1Hz).

Use of the pulsing regime described herein and lower wavelengths of light (in the visible spectrum) have been found to provide significantly enhanced results in which a greater proportion of the energy delivered is concentrated at the frit layer 12/bonding bead 8 interface, and excess heat build-up (and associated glass fracture) at interlayer 11 is avoided or at least ameliorated.

The delivery head 4 is used to deliver light energy through the glazing panel in order for energy to be concentrated at the frit layer 12. Separation of the panel 16 from the frame 7 is effected as a result of energy absorption at the frit layer 12/bonding bead 8 interface resulting in rapid heating and either cleavage or degradation of the frit material 12 comprising the panel 16, or degradation of material comprising the bonding bead 8 (or degradation of a primer coat applied to the glazing panel prior to installation in contact with the bonding bead). The release mechanism may comprise a combination of the mechanisms described.

Referring to figure 7, the tubes 2a, 2b are controlled to produce high intensity pulses according to a predetermined pulse regime by means of control unit 29 operating to apropriate programmed instructions in conjunction with the manual trigger. Control unit 29, controls the operation of a trigger network 30 to activate a pulse forming network 31 to supply current to the tubes 2a,2b (in accordance with the 'interlock' arrangement mentioned above) to produce a light pulse having the desired characteristics.

A further feature of the apparatus is that a so called "simmer circuit" is used to supply a substantially continuous leakage/trickle current to the flashlamps 2a or 2b when the apparatus is on or in "standby" mode. This prevents capacitor overcharge and prolongs flashlamp life. "Simmer circuits" are known from gas discharge apparatus in general. A unique feature of the present arrangement is that the trickle/seepage current is used as a safety feature because the current drawn by the flashlamps 2a, 2b is continuously monitored (by the control unit 29), the current supply to the flashlamps 2a , 2b being cut off if no current is drawn (due to lamp failure or breakage).

Referring to figure 8, the pulse forming network 31 includes a capacitor bank 32 charged to a preset voltage by a power supply 33. The capacitor bank 32 remains charged until a trigger pulse from the trigger network initiates discharge in the discharge tube 2, when charge stored in capacitor bank 32 discharges through inductor 34 and a secondary trigger transformer 35, to the tube 2.

The time constant of the discharge (and hence the light pulse duration and "profile") is determined by the values of the inductor 34 and capacitor bank 32. For an operational system a pulse duration of lms-2ms has been found to be suitable. For present purposes, pulse duration should be understood to be the time interval between the light power reaching half its maximum value and subsequently falling to half its maximum value. The required pulse duration varies depending upon the optical properties of the glazing panel to be released. For example different glazing tints require different levels of energy to be supplied to effect release, and hence different power levels. The capacitor bank 32 and inductor 34 can therefore be reset to appropriate values depending upon the glazing panel to be released in order to modify the "profile" and power of the pulse delivered. Manually or automatically selectable controls 70 on the base unit 40 permit the output energy and/or pulse duration of the flash tubes 2a,2b to be modified according to the tint of the object glazing panel. The apparatus may be provided with preset settings selectable by the operator (or automatically) appropriate to common glazing tints or other known variables. To adjust the optical power of the apparatus the capacitor charging power supply may be varied.

The pulse repetition frequency (corresponding to the length of the inter-pulse interval (T off)) is important to ensure that the period between successive pulses is sufficient to allow the heat absorbed in the thickness of the screen to dissipate before more energy is delivered.

Additionally overheating of the lamp tubes 2a,2b is ameliorated by this means and lamp life enhanced. The control unit 29 acts to override the manual trigger to inhibit the trigger network 30 from initiating discharge until the required time period has elapsed. The minimum interval between firing typically controlled to be in the range 0.3Hz-lHz. A maximum interval between firing is also set by the control system, typically in the range 10-20 seconds or above. If the operator does not fire the flash tubes until after the maximum interval has passed from the preceding firing, the control system automatically discharges the capacitor arrangement to ground and switches the power supply to a standby mode; thereafter the power supply on the base unit 40 must be set to an 'active' mode before the apparatus will operate. The maximum time delay 'time out' feature ensures that the apparatus cannot be left in an operational mode accidentally following use. This is an important safety feature of using this embodiment.

The energy delivered per light pulse is selected according to the tint or other qualities of the glazing panel but typically varies between 500-1500 Joules per pulse. Because non-laser light is used, the energy attenuates rapidly with distance from the optical head 4 and is therefore sufficient to effect debonding of the glazing panel but less susceptible to unauthorised or accidental operator misuse. This is an important safety feature of using this embodiment.

In one embodiment, the delivery head 4 may be carried by a motorised tracking system (not shown) arranged to track the head 4 about the entire periphery of glazing panel I6 to effect complete release of the panel 16 from frame 7. The operation of the tracking system 4 and light energy delivery by head 4 are co-ordinated (by control means-not shown) such that the speed of tracking about the frame is maintained at a predetermined rate.

For optimum performance it is preferred that subsequent pulses of the pulsed light overlap spatially.

## Claims

1. A method of releasing a glazing panel (16) from a frame (7) to which the panel is bonded by interposed bonding material (8), the method comprising:
i) arranging light energy delivery means (4) adjacent the glazing panel; and,
ii) operating the light energy delivery means (4) to transmit light energy through the glazing panel (16) to effect release of the glazing panel (16) from the frame (7);
**characterised in that** the light energy delivery means (4) comprises flashlamp electrical gas discharge apparatus (2).

2. A method according to claim 1, wherein:
a) the light energy delivered is of a wavelength substantially in either the range 300nm-1500nm or 400nm-700nm; and/or
b) the light energy delivered comprises a plurality of wavelengths; and/or
c) the light energy attenuates significantly with distance such that at a few centimetres from the light energy delivery means (4) the light energy density is significantly diminished from its maximum value, whereby at a distance substantially in the range a few centimetres or less from the light energy delivery means (4) the light energy density is significantly below a maximum value; and/or
d) the light energy is non-coherent; and/or
e) the light energy delivered is pulsed according to a predetermined regime wherein the pulse duration (Tₒₙ) of a light pulse event is substantially in the range 1µs-100ms.

3. A method according to claim 1 or claim 2, wherein:
a) the pulse regime is controlled to inhibit a following light pulse event if the time elapsing after a preceding light pulse event is less than a predetermined time; and/or
b) the pulse regime is controlled to inhibit a following light pulse event if the time elapsing after a preceding light pulse event is greater than a predetermined time; and/or
c) the pulse duration (Tₒₙ) is less than minimum permissible inter-pulse interval (T_{off}).

4. A method according to any preceding claim, wherein the light energy delivery means (4) is hand held and positionable relative to the glazing (16) manually by an operator.

5. A method according to any preceding claim, wherein operation of the flashlamp electrical gas discharge apparatus (2) is controlled to limit the pulse rate and/or duration of the light pulse.

6. A method according to claim 5, wherein the operation of the flashlamp electrical gas discharge apparatus (2) is controlled by:
i) charging a capacitor arrangement (32);
ii) initiating a trigger pulse to discharge the capacitor arrangement (32); and,
iii) discharging the capacitor arrangement (32) to the flashlamp gas discharge apparatus (2);

7. A method according to claim 6, wherein the flashlamp electrical gas discharge apparatus (2) is fed with a trickle/seepage current at times other than during a pulse event, the trickle seepage current preferably being monitored to provide an indication of the operability of the flashlamp electrical gas discharge apparatus (2).

## Patentansprüche

1. Verfahren zum Lösen einer Glasscheibe (16) von einem Rahmen (7), mit dem die Scheibe durch dazwischen angeordnetes Verbindungsmaterial (8) verbunden ist, wobei das Verfahren aufweist:
i) Anordnen einer Lichtenergie-Abgabeeinrichtung (4) neben der Glasscheibe, und
ii) Betreiben der Lichtenergie-Abgabeeinrichtung (4) zum Senden von Lichtenergie durch die Glasscheibe (16) zum Bewirken eines Lösens der Glasscheibe (16) vom Rahmen (7),
**dadurch gekennzeichnet, dass** die Lichtenergie-Abgabeeinrichtung (4) ein elektrisches Gasentladungs-Blitzlichtgerät (2) aufweist.

2. Verfahren nach Anspruch 1, wobei:
a) die abgegebene Lichtenergie von einer Wellenlänge im Wesentlichen in entweder dem Bereich 300nm-1500nm oder 400nm-700nm ist, und/oder
b) die abgegebene Lichtenergie mehrere Wellenlängen aufweist, und/oder
c) die Lichtenergie sich mit Abstand signifikant derart abschwächt, dass wenige Zentimeter von der Lichtenergie-Abgabeeinrichtung (4) die Lichtenergiedichte von ihrem Maximumwert signifikant verringert ist, wodurch in einem Abstand im Wesentlichen im Bereich wenige Zentimeter oder weniger von der Lichtenergie-Abgabeeinrichtung (4) die Lichtenergiedichte signifikant unter einem Maximumwert ist, und/oder
d) die Lichtenergie nichtkohärent ist, und/oder
e) die abgegebene Lichtenergie entsprechend einem vorbestimmten Regime gepulst ist, wobei die Impulsdauer (Tₐₙ) eines Lichtimpulsereignisses im wesentlichen im Bereich 1µs-100ms ist.

3. Verfahren nach Anspruch 1 oder Anspruch 2, wobei:
a) das Impulsregime gesteuert wird zum Verhindern eines folgenden Lichtimpulsereignisses, wenn die nach einem vorhergehenden Lichtimpulsereignis verstreichende Zeit kleiner als eine vorbestimmte Zeit ist, und/oder
b) das Impulsregime gesteuert wird zum Verhindern eines folgenden Lichtimpulsereignisses, wenn die nach einem vorhergehenden Lichtimpulsereignis verstreichende Zeit größer als eine vorbestimmte Zeit ist, und/oder
c) die Impulsdauer (Tₐₙ) kleiner als ein minimal zulässiges Zwischenimpulsintervall (Tₐᵤₛ) ist.

4. Verfahren nach einem der vorhergehenden Ansprüche, wobei die Lichtenergie-Abgabeeinrichtung (4) von Hand gehalten und von einer Bedienungsperson relativ zum Glas (16) positionierbar ist.

5. Verfahren nach einem der vorhergehenden Ansprüche, wobei der Betrieb des elektrischen Gasentladungs-Blitzlichtgeräts (2) gesteuert wird zum Begrenzen der Impulsrate und/oder Dauer des Lichtimpulses.

6. Verfahren nach Anspruch 5, wobei der Betrieb des Gasentladungs-Blitzlichtgeräts (2) gesteuert wird durch:
i) Laden einer Kondensatoranordnung (32),
ii) Auslösen eines Triggerimpulses zum Entladen der Kondensatoranordnung (32), und
iii) Entladen der Kondensatoranordnung (32) zum Gasentladungs-Blitzlichtgeräts (2).

7. Verfahren nach Anspruch 6, wobei dem Gasentladungs-Blitzlichtgeräts (2) zu Zeiten anders als während eines Impulsereignisses ein Sicker/Leck-Strom zugeführt wird, wobei der Sickerleckstrom vorzugsweise überwacht wird, um eine Anzeige der Betriebsfähigkeit des Gasentladungs-Blitzlichtgeräts (2) bereitzustellen.

## Revendications

1. Procédé de démontage d'un panneau de vitrage (16) d'un cadre (7) auquel le panneau est fixé par un liant interposé (8), le procédé comprenant :
i) la mise en place de moyens de fourniture d'énergie lumineuse (4) de façon adjacente au panneau de vitrage ; et
ii) l'actionnement des moyens de fourniture d'énergie lumineuse (4) à des fins de transmission de l'énergie lumineuse dans le panneau de vitrage (16) pour effectuer le démontage du panneau de vitrage (16) du cadre (7) ;
**caractérisé en ce que** les moyens de fourniture d'énergie lumineuse (4) comprennent un appareil de décharge lumineuse électrique par éclair (2).

2. Procédé selon la revendication 1, dans lequel :
a) l'énergie lumineuse fournie est d'une longueur d'onde essentiellement comprise dans la gamme de 300 nm à 1500 nm ou dans la gamme de 400 nm à 700 nm ; et/ou
b) l'énergie lumineuse fournie comprend une pluralité de longueurs d'ondes ; et/ou
c) l'énergie lumineuse s'atténue considérablement avec la distance, de sorte qu'à quelques centimètres des moyens de fourniture de l'énergie lumineuse (4), la densité d'énergie lumineuse est considérablement réduite par rapport à sa valeur maximale, moyennant quoi à une distance essentiellement comprise dans la gamme de quelques centimètres ou moins des moyens de fourniture de l'énergie lumineuse (4), la densité d'énergie lumineuse se situe considérablement en dessous d'une valeur maximale ; et/ou
d) l'énergie lumineuse est non-cohérente ; et/ou
e) l'énergie lumineuse est pulsée selon un régime prédéterminé dans lequel la durée d'impulsion (Tₒₙ) d'un événement d'impulsion lumineuse est sensiblement comprise dans la gamme de 1 µs à 100 ms.

3. Procédé selon la revendication 1 ou 2, dans lequel :
a) le régime d'impulsion est commandé afin d'inhiber un événement suivant d'impulsion lumineuse si le temps s'écoulant après un événement précédent d'impulsion lumineuse est inférieur à un temps prédéterminé ; et/ou
b) le régime d'impulsion est commandé afin d'inhiber un événement suivant d'impulsion lumineuse si le temps s'écoulant après un événement précédent d'impulsion lumineuse est supérieur à un temps prédéterminé ; et/ou
c) la durée d'impulsion (Tₒₙ) est inférieure à l'intervalle d'impulsion autorisé minimal (T_{off}).

4. Procédé selon une quelconque revendication précédente, dans lequel les moyens de fourniture d'énergie lumineuse (4) sont portables et peuvent être positionnés par rapport au vitrage (16) manuellement par un opérateur.

5. Procédé selon une quelconque revendication précédente, dans lequel le fonctionnement de l'appareil de décharge lumineuse électrique par éclair (2) est contrôlé pour limiter la fréquence de répétition des impulsions et/ou la durée de l'impulsion lumineuse.

6. Procédé selon la revendication 5, dans lequel le fonctionnement de l'appareil de décharge lumineuse électrique par éclair (2) est commandé par :
i) le chargement d'un dispositif de condensateurs (32) ;
ii) l'initiation d'une impulsion de déclenchement pour décharger le dispositif de condensateurs (32) ; et
iii) le déchargement du dispositif de condensateurs (32) vers l'appareil de décharge lumineuse électrique par éclair (2).

7. Procédé selon la revendication 6, dans lequel l'appareil de décharge lumineuse électrique par éclair (2) est alimenté avec un courant de compensation/fuite à des moments autres que pendant un événement d'impulsion, le courant de compensation/fuite étant de préférence surveillé pour fournir une indication de la capacité d'exploitation de l'appareil de décharge lumineuse électrique par éclair (2).
